# EUROPEAN PATENT APPLICATION

(11) **EP 4 528 940 A1**
(43) Date of publication of application: **26.03.2025**
(21) Application number: 23923554.2
(22) Date of filing: 05.05.2023
(51) Int. Cl.: H01R 13/52

(54) **ANTI-ELECTRIC-SHOCK SOCKET**

(30) Priority: 24.02.2023 CN 202310172776
(71) Applicant: TWS Technology (Guangzhou) Limited, Guangzhou, Guangdong 510663 (CN)
(72) Inventor: CHEN, Qingyun, Guangzhou, Guangdong 510663 (CN); WANG, Jinfu, Guangzhou, Guangdong 510663 (CN); OUYANG, Guang, Guangzhou, Guangdong 510663 (CN)
(74) Representative: Zaboliene, Reda
(86) International application number: PCT/CN2023/092348
(87) International publication number: WO 2024/174384

(57) **Abstract**

The present disclosure relates to the technical field of electrical equipment, and discloses an anti-electric shock socket including a housing, a plurality of shrapnel insulated and isolated from each other are arranged in the housing, and jacks corresponding to the shrapnel respectively are further provided in the housing; a plurality of isolation cavities isolated from each other are further provided in the housing, the isolation cavities correspond to the jacks one to one, each isolation cavity has cavity walls spaced apart from each other along an extension direction of the jacks, each jack passes through the cavity walls of the corresponding isolation cavity, and a plurality of outlets communicated with the corresponding isolation cavities are further provided on the housing. Each jack forms an air isolation gap between the cavity walls of the corresponding isolation cavity spaced apart from each other, when the socket is soaked in water or sprayed with water and the water enters the jacks of the socket, the water in the isolation cavities is discharged through the outlets, so that each jack, between the two cavity walls of the isolation cavity, is insulated and isolated by the air isolation gap, and water stains on a surface of the housing will not conduct electricity with the shrapnel inside the housing, which avoids the risk of electric shock caused by the fact that water stains on the surface of the housing communicate with the shrapnel in the socket and ensures safety of power utilization.

## Description

### TECHNICAL FIELD

The present disclosure relates to the technical field of electrical equipment, and in particular to an anti-electric shock socket.

### BACKGROUND

Sockets are the most commonly used electrical equipment in people's daily life. The application environment of the sockets is complex and changeable, and the sockets are often arranged in bathrooms, outdoors, and other water vapor-rich environment, so the socket usually needs to be waterproof to ensure people's safety in use.

The Chinese patent with publication number CN108173052A discloses a waterproof plug and socket, including a socket box, a plug housing, and a plug, where a sealing box is fixedly connected to a front of the socket box, a sealing groove is provided on one side of the sealing box, a sealing plate is slidably connected to an inner wall of the sealing groove, a front panel is fixedly connected to a front of the sealing box, a slot is provided on a front of the front panel, and an electric jack is provided on an inner wall of the slot; both sides of an inner wall of the plug housing are provided with a sliding slot, each of both sides of a front of the plug housing is fixedly connected to a limit strip, a back of the plug housing is provided with a waterproof jack, a top and a bottom of an inner wall of the waterproof jack each are fixedly connected to a first waterproof rubber, each of both sides of the inner wall of the waterproof jack is fixedly connected to a second waterproof rubber; a back of the plug is penetrated with a bolt, each of both sides of the plug is fixedly connected with a sliding rail compatible with the sliding slot, a bottom of a front of the plug is provided with a wire slot, an inner wall of the wire slot is penetrated with a wire, and an end of the wire disposed inside the plug is fixedly connected with the bolt.

The above-described socket utilizes the slot to transfer a contact surface to an interior of the socket, and utilizes the waterproof rubbers to isolate environments of an interior and an exterior of the plug housing, i.e., the existing sockets are waterproofed by adopting a method of reducing the entry of water vapor into the interior of the socket housing.

However, the application environment of AC sockets applied to the outdoor power supply is not a closed environment indoors. When the AC sockets are used outdoors, they often get soaked in water or sprayed with water, part of the water will remain inside the AC sockets which have been immersed or drenched in the water, and water stains will remain on a surface of the socket housing, and the water stains connect to the water inside to form a pathway, so that when people contact the water stains on the surface of the socket housing, there is a risk of electrical shock.

### SUMMARY

An object of the present disclosure is to provide an anti-electric shock socket to solve the problem in the prior art that an electric shock risk exists when a socket of an outdoor power supply is used after being soaked in water or sprayed with water.

In order to achieve the above object, the present disclosure provides an anti-electric shock socket, including a housing, where the housing is provided therein with a plurality of shrapnel that are insulated and isolated from each other and is provided with jacks corresponding to the plurality of shrapnel respectively; the housing is further provided therein with a plurality of isolation cavities isolated from each other, the plurality of isolation cavities correspond to the jacks one to one, the plurality of isolation cavities are each provided with cavity walls spaced apart from each other along an extension direction of the jacks, each of the jacks passes through the cavity walls of corresponding one of the plurality of isolation cavities, and the housing is further provided with a plurality of outlets communicated with the plurality of isolation cavities respectively.

Preferably, the housing includes a socket body and a socket panel arranged on one side of the socket body, where the socket body is an insulating socket body, and the plurality of shrapnel are each arranged in the socket body;
The socket panel and the socket body are arranged spaced apart along the extension direction of the jacks, a separation element with a radiation shape is connected between the socket panel and the socket body, two of the jacks that are adjacent are separated by the separation element, and the separation element divides a space between the socket panel and the socket body into the plurality of isolation cavities.

Preferably, a connection block is further provided between the socket panel and the socket body, there are a plurality of the connection blocks that are arranged spaced apart along an edge of the socket panel, and the plurality of outlets are each formed by a spacing between two of the plurality of connection blocks that are adjacent.

Preferably, a thickness of a spacing between the socket panel and the socket body is greater than or equal to 1 mm.

Preferably, the housing further includes a socket rear cover, the socket rear cover is arranged on a side of the socket body away from the socket panel, the socket rear cover is provided with connecting holes through which the plurality of shrapnel pass respectively, and a sealing gasket is arranged between the socket rear cover and the socket body.

Preferably, the sealing gasket is made of silica gel.

Preferably, the plurality of shrapnel include fire wire shrapnel, zero wire shrapnel, and ground wire shrapnel, and the fire wire shrapnel, the zero wire shrapnel, and the ground wire shrapnel are arranged in a triangle shape.

Compared with the prior art, the anti-electric shock socket of embodiments of the present disclosure has following beneficial effects: the housing is provided therein with the isolation cavities, and the jacks pass through the cavity walls, which are spaced apart from each other, of the corresponding isolation cavities, so that the jacks each form an air isolation gap between the cavity walls spaced apart from each other, when the socket is soaked in water or sprayed with water resulting in the water entering the jack, the water in the isolation cavities is discharged by the outlets, so that the jacks, between the two cavity walls of the corresponding isolation cavities, are each insulated and isolated by the air isolation gap, water stains on a surface of the housing will not conduct electricity with the shrapnel inside the housing, the risk of electric shock caused by the fact that residual water stains on the surface of the housing communicate with the shrapnel inside the socket is avoided, and the safety of power utilization is ensured.

### BRIEF DESCRIPTION OF THE DRAWINGS

FIG. 1 is a schematic structural diagram of an anti-electric shock socket according to the present disclosure;
FIG. 2 is a schematic structural diagram of a three-dimensional structure of the anti-electric shock socket of FIG. 1 after being assembled;
FIG. 3 is a front view of the anti-electric shock socket of FIG. 2;
FIG. 4 is a sectional view of the anti-electric shock socket of FIG. 3 along line A-A;
FIG. 5 is a top view of the anti-electric shock socket of FIG. 3;
FIG. 6 is a sectional view of the anti-electric shock socket of FIG. 5 along line B-B;
FIG. 7 is a schematic diagram of shrapnel and a sealing gasket of the anti-electric shock socket of FIG. 1, in an assembled state;
FIG. 8 is a schematic diagram showing a usage status of the anti-electric shock socket according to the present disclosure.

In the figures: 1, housing; 11, socket body; 12, socket panel; 13, socket rear cover; 14, separation element; 15, connection block; 2, shrapnel; 21, fire wire shrapnel; 22, zero wire shrapnel; 23, ground wire shrapnel; 3, jack; 4, isolation cavity; 5, outlet; 6, sealing gasket; 7, plug; and 8, outdoor power supply panel.

### DETAILED DESCRIPTION

Specific embodiments of the present disclosure are further described in detail below with reference to the accompanying drawings and examples. The following embodiments are used to illustrate the present disclosure, but are not intended to limit the scope of the present disclosure.

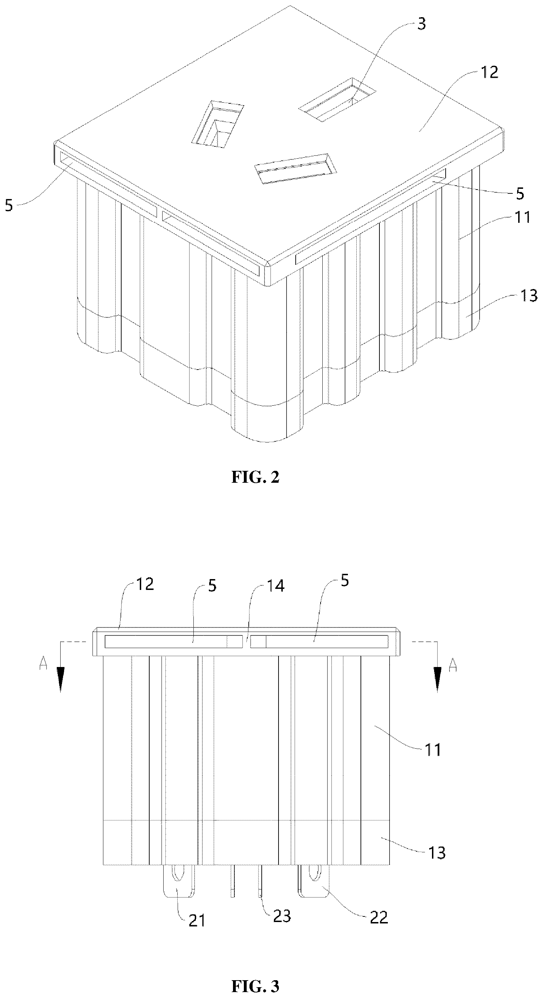

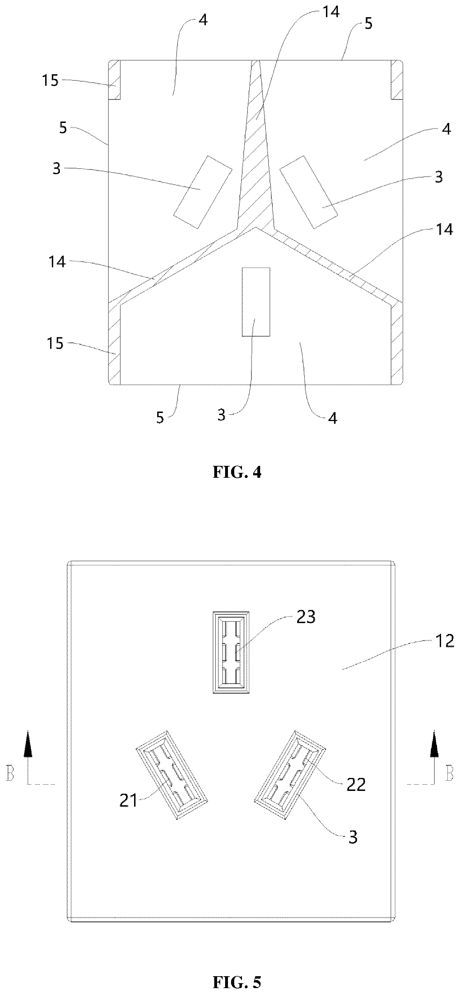

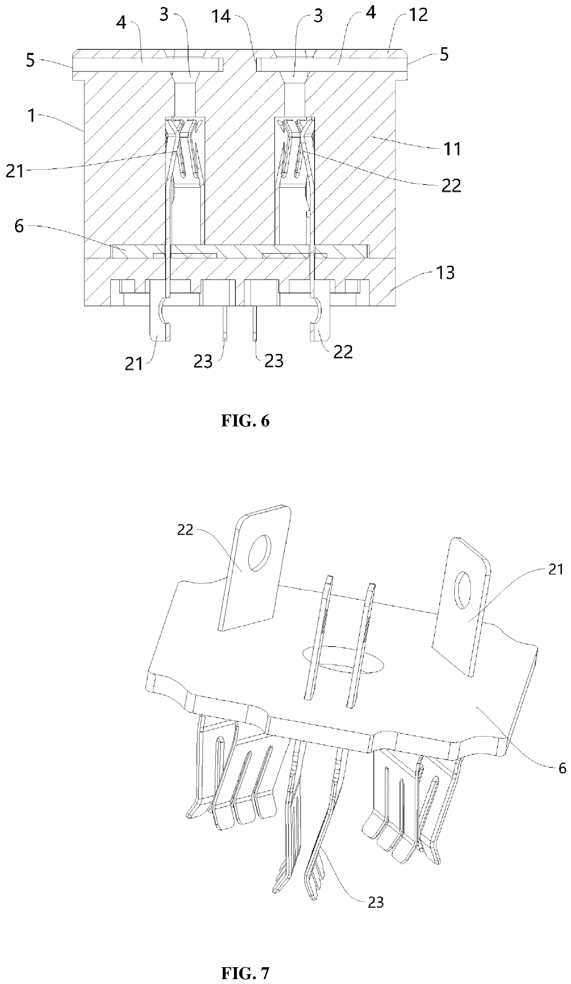

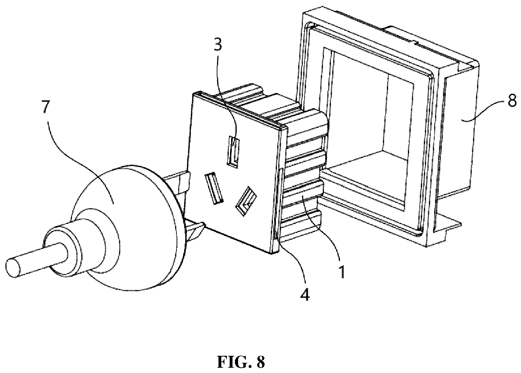

A preferred embodiment of an anti-electric shock socket of the present disclosure is shown in FIGS. 1 to 8, the anti-electric shock socket includes a housing 1, shrapnel 2, jacks 3, isolation cavities 4, and outlets 5, where the housing 1 is made of an insulating material, and the shrapnel 2, the jacks 3, the isolation cavities 4, and the outlets 5 are all arranged inside the housing 1. The housing 1 is used for being assembled with an outdoor power supply panel 8. In the embodiment, the entire housing 1 is a cuboid, which has the same external dimensions as existing sockets, and can be plugged into the existing outdoor power supply panel 8.

The shrapnel 2 each are configured to be connected to a power line of a host of an outdoor power supply, there are a plurality of shrapnel 2, the plurality of shrapnel 2 are arranged inside the housing 1 and insulated and isolated from each other to avoid potential safety hazards caused by short circuit connection between the power lines. The jacks 3 are provided on the housing 1, the jacks 3 correspond to the shrapnel 2 one to one, and the jacks 3 are used for plugging of terminals of a plug 7 and electrical connection of the terminals of the plug 7 with the shrapnel 2.

The isolation cavities 4 are provided in the housing 1, and there are a plurality of isolation cavities 4 corresponding to the jacks 3 one to one, that is, the number of the isolation cavities 4 is the same as that of the jacks 3. The isolation cavities 4 each are provided with cavity walls spaced apart from each other along an extension direction of the jacks 3, and each of the jacks 3 passes through the cavity walls of corresponding one of the isolation cavities 4. The extension direction of the jacks 3 is a plugging direction when the plug 7 is plugged into the jacks 3.

Two portions of each of the jacks 3 at two cavity walls of the corresponding one of the isolation cavities 4 are disconnected from each other. When the plug 7 is plugged into the jacks 3, the plug 7 sequentially passes through the two cavity walls of each of the isolation cavities 4. Each of the jacks 3 forms an air isolation gap between the two cavity walls of the corresponding one of the isolation cavities 4, and two portions of each of the jacks 3 at two sides of the corresponding one of the isolation cavity 4 are insulated and isolated by the air isolation gap due to the insulation effect of air, so that potential safety hazards caused by electric connection between the shrapnel 2 and water stains on an outer side of the housing 1 are avoided.

A plurality of outlets 5 are further arranged on the housing 1, and the outlets 5 are communicated with the isolation cavities 4 respectively, that is, each of the isolation cavities 4 is provided with an outlet 5 communicated with an outside, so that water in the isolation cavities 4 can be discharged to the outside of the housing 1. Since the isolation cavities 4 each are provided with cavity walls between which there is a spacing along the extension direction of the jacks 3, when the socket is soaked in water or sprayed with water resulting in that water remains in the isolation cavities 4, the water in the isolation cavities 4 can be discharged from the outlets 5 in time, thereby the air isolation gap is formed between the cavity walls of each of the isolation cavities 4.

The isolation cavities 4 are provided in the housing 1 of the anti-electric shock socket, and each of the jacks 3 passes through the cavity walls, which are spaced apart from each other, of the corresponding one of the isolation cavities 4, therefore, the jacks 3 each form the air isolation gap between the cavity walls spaced apart from each other. When the socket is soaked in water or sprayed with water so that water enters the jacks 3 of the socket, the water in the isolation cavities 4 is discharged through the outlets 5, thus each of the jacks 3 is insulated and isolated by the air isolation gap between the two cavity walls of the corresponding one of the isolation cavities 4, and the water stains on a surface of the housing 1 do not conduct electricity with the shrapnel 2 inside the housing 1, so that a risk of electrical shock caused by the water stains on the surface of the housing 1 electrically communicating with the shrapnel 2 in the socket is avoided, and the safety power utilization of people is ensured.

Preferably, the housing 1 includes a socket body 11, and a socket panel 12 arranged on one side of the socket body 11, the socket body 11 is an insulating socket body, and each shrapnel 2 are all arranged in the socket body 11;
The socket panel 12 and the socket body 11 are arranged spaced apart along the extension direction of the jacks 3, a separation element 14 with a radiation shape is connected between the socket panel 12 and the socket body 11, each two adjacent jacks 3 are separated by the separation element 14, and the separation element 14 divides a space between the socket panel 12 and the socket body 11 into the isolation cavities 4.

In the embodiment, the socket body 11 is solid and insulated by itself, the shrapnel 2 are arranged in the socket body 11, and the socket body 11 is capable of being used for insulating and isolating the shrapnel 2 from each other. Besides, the shrapnel 2 are separated from each other by using the socket body 11, and the socket body 11 is capable of limiting a flow of water droplets entering the socket body 11, so that the water droplets are prevented from connecting the adjacent shrapnel 2 to form a short circuit.

The housing 1 is formed by the socket panel 12 and the socket body 11, and the isolation cavities 4 are formed by dividing the space between the socket panel 12 and the socket body 11 with the separation element 14, thereby simplifying a structure of the isolation cavities 4. In the embodiment, the socket panel 12 and the socket body 11 are integrated into a single structure, and the isolation cavities 4 may be formed by mold shaping; and in other embodiments, the socket panel 12 and the socket body 11 may also be detachably connected by screws, and the separation element 14 is integrally formed with the socket body 11 or the socket panel 12, and the isolation cavities 4 are formed by assembling.

The separation element 14 is of a radiation shape, and each two adjacent isolation cavities 4 are separated by the separation element 14. The separation element 14 is capable of dividing the space between the socket panel 12 and the socket body 11 into a plurality of independent spaces to form the isolation cavities 4. Besides, the separation element 14 is capable of blocking the water flow among the isolation cavities 4, and the water is prevented from connecting the shrapnel 2 to form a short circuit.

Preferably, a connection block 15 is further arranged between the socket panel 12 and the socket body 11, and there are a plurality of connection blocks 15 that are arranged spaced apart along an edge of the socket panel 12. The outlets 5 each are formed by a spacing between each two adjacent connection blocks 15.

The connection blocks 15 are arranged, at four corners, between the socket panel 12 and the socket body 11, and the connection blocks 15 are capable of increasing a connection strength between the socket panel 12 and the socket body 11 and prolonging a service life of the socket. The outlets 5 each are formed by a spacing between the two adjacent connection blocks 15, which simplifies a forming manner of the outlets 5.

Preferably, a thickness of a spacing between the socket panel 12 and the socket body 11 is greater than or equal to 1 mm.

The spacing between the socket panel 12 and the socket body 11 is configured to prevent electrical shock. However, when the spacing is too small, discharging water is inconvenient, and the voltage may break down the air isolation gaps. On the other hand, when the spacing is too small, a cost of the mold is increased, and a strength of the mold is reduced. When the thickness of the spacing is greater than or equal to 1 mm, proper spacing may be ensured to facilitate discharging water and forming the air isolation gap.

In the embodiment, the thickness of the spacing between the socket panel 12 and the socket body 11 is specifically 1.5 mm. The thickness of the spacing is moderate, which allows two portions of each of the jacks 3 at two cavity walls of the corresponding one of the isolation cavities 4 to be disconnected from each other. The thickness of the spacing of 1.5 mm also allows water to flow out quickly, avoiding the siphon effect generated as the thickness of the spacing is too small, which affects a speed of discharging water, and avoiding the effect of a too large thickness of the spacing between the socket panel 12 and the socket body 11 on a size of the socket, and at the same time balancing the cost and the strength of the mold. In other embodiments, the thickness of the spacing between the socket panel 12 and the socket body 11 may be 1.3 mm, 2 mm, 3 mm, etc.

Preferably, the housing 1 further includes a socket rear cover 13 which is arranged on a side of the socket body 11 away from the socket panel 12, the socket rear cover 13 is provided with connecting holes for each shrapnel 2 to pass through respectively, and a sealing gasket 6 is further arranged between the socket rear cover 13 and the socket body 11.

The socket rear cover 13 is detachably connected with the socket body 11 through a screw, which facilitates connecting each shrapnel 2 to the power line after the socket rear cover 13 is removed. The sealing gasket 6 is capable of sealing a gap between the socket rear cover 13 and the socket body 11, so as to prevent water stains from entering an interior of the socket body 11 from a position of the socket rear cover 13 when the socket is soaked in water or sprayed with water.

Preferably, the sealing gasket 6 is made of silica gel.

The silica gel has the characteristics of high temperature resistance, strong elasticity, and good insulation performance, which can not only increase sealing performance of the socket, but also improve the insulation performance, so that the silica gel is suitable for the complex application environment of the socket.

Preferably, the shrapnel 2 includes fire wire shrapnel 21, zero wire shrapnel 22, and ground wire shrapnel 23, and the fire wire shrapnel 21, the zero wire shrapnel 22, and the ground wire shrapnel 23 are arranged in a triangle shape.

The fire wire shrapnel 21, the zero wire shrapnel 22, and the ground wire shrapnel 23 that are arranged in the triangle shape, are suitable for existing three-hole sockets. In other embodiments, when the outdoor power supply socket requires to be a two-hole socket, the ground wire shrapnel 23 may be omitted.

In summary, the embodiments of the present disclosure provide an anti-electric shock socket, where isolation cavities are provided in a housing of the socket, and each of jacks passes through cavity walls, which are spaced apart from each other, of corresponding one of the isolation cavities; therefore, the jacks each form an air isolation gap between the cavity walls spaced apart from each other; when the socket is soaked in water or sprayed with water which causes water to enter the jacks of the socket, the water in the isolation cavities is discharged through outlets, thereby each of the jacks is insulated and isolated by the air isolation gap between the two cavity walls of the corresponding one of the isolation cavities, water stains on a surface of the housing will not conduct electricity with shrapnel inside the housing, the risk of electric shock caused by the fact that residual water stains on the surface of the housing electrically communicate with the shrapnel inside the socket is avoided, and the safety of power utilization is ensured.

The above are only preferred embodiments of the present disclosure, and it should be noted that, for a person of ordinary skill in the art, several improvements and replacements may be made without departing from the technical principle of the present disclosure, and the improvements and replacements should also fall within the protection scope of the present disclosure.

## Claims

1. An anti-electric shock socket, comprising a housing, wherein the housing is provided therein with a plurality of shrapnel that are insulated and isolated from each other and is provided with jacks corresponding to the plurality of shrapnel respectively; the housing is further provided therein with a plurality of isolation cavities isolated from each other, the plurality of isolation cavities correspond to the jacks one to one, the plurality of isolation cavities are each provided with cavity walls spaced apart from each other along an extension direction of the jacks, each of the jacks passes through the cavity walls of corresponding one of the plurality of isolation cavities, and the housing is further provided with a plurality of outlets communicated with the plurality of isolation cavities respectively.

2. The anti-electric shock socket according to claim 1, wherein the housing comprises a socket body and a socket panel arranged on one side of the socket body, wherein the socket body is an insulating socket body, and the plurality of shrapnel are each arranged in the socket body;
the socket panel and the socket body are arranged spaced apart along the extension direction of the jacks, a separation element with a radiation shape is connected between the socket panel and the socket body, two of the jacks that are adjacent are separated by the separation element, and the separation element divides a space between the socket panel and the socket body into the plurality of isolation cavities.

3. The anti-electric shock socket according to claim 2, wherein a connection block is further provided between the socket panel and the socket body, there are a plurality of the connection blocks that are arranged spaced apart along an edge of the socket panel, and the plurality of outlets are each formed by a spacing between two of the plurality of connection blocks that are adjacent.

4. The anti-electric shock socket according to claim 2, wherein a thickness of a spacing between the socket panel and the socket body is greater than or equal to 1 mm.

5. The anti-electric shock socket according to claim 2, wherein the housing further comprises a socket rear cover, the socket rear cover is arranged on a side of the socket body away from the socket panel, the socket rear cover is provided with connecting holes through which the plurality of shrapnel pass respectively, and a sealing gasket is arranged between the socket rear cover and the socket body.

6. The anti-electric shock socket according to claim 5, wherein the sealing gasket is made of silica gel.

7. The anti-electric shock socket according to any one of claims 1-6, wherein the plurality of shrapnel comprise fire wire shrapnel, zero wire shrapnel, and ground wire shrapnel, and the fire wire shrapnel, the zero wire shrapnel, and the ground wire shrapnel are arranged in a triangle shape.
